Europäisches Patentamt

European Patent Office

Office européen des brevets

(19)

(11) Publication number: **0 147 200**
**B1**

(12) # EUROPEAN PATENT SPECIFICATION

(45) Date of publication of patent specification: **12.07.89**

(21) Application number: **84308991.3**

(22) Date of filing: **20.12.84**

(51) Int. Cl.⁴: **B 60 K 41/02, F 16 D 27/16**

(54) **System for controlling the clutch torque of an electromagnetic clutch for vehicles.**

(30) Priority: **22.12.83 JP 243452/83**

(43) Date of publication of application:
**03.07.85 Bulletin 85/27**

(45) Publication of the grant of the patent:
**12.07.89 Bulletin 89/28**

(84) Designated Contracting States:
**AT CH DE FR GB IT LI NL SE**

(56) References cited:
**DE-A-3 306 519**
**FR-A-1 245 117**
**JP-A-57 015 024**
**US-A-2 836 326**
**US-A-3 335 829**

(73) Proprietor: **FUJI JUKOGYO KABUSHIKI KAISHA**
**7-2 Nishishinjuku 1-chome Shinjuku-ku**
**Tokyo (JP)**
(73) Proprietor: **Van Doorne's Transmissie B.V.**
**Dr. Hub van Doorneweg 120 Postbus 500**
**NL-5026 RA Tilburg (NL)**

(72) Inventor: **Sakakiyama, Ryuzo**
**1-21, Takamatsu Toshima-ku**
**Tokyo (JP)**

(74) Representative: **Kirk, Geoffrey Thomas et al**
**BATCHELLOR, KIRK & EYLES 2 Pear Tree Court**
**Farringdon Road**
**London EC1R 0DS (GB)**

Courier Press, Leamington Spa, England.

## Description

The present invention relates to a system for controlling the clutch torque of an electromagnetic clutch disposed between the crankshaft of an engine and the transmission of a motor vehicle.

A clutch torque control system for the starting and deceleration of a vehicle is disclosed in Japanese Laid-Open Patent No. 57-15024. A clutch torque control system for starting and decelerating a motor vehicle is known to include a transmission and an electromagnetic clutch engageable between the engine and the transmission. The clutch is automatically disengaged when the vehicle speed falls below a predetermined value. The control system to achieve this includes a means for measuring the engine speed, a means for measuring the speed of a driven member of the clutch when disengaged and a means which detects the position of the accelerator pedal to produce an acceleration signal. In the system, the clutch current flowing in a coil of the clutch exponentially increases with respect to the increase of the engine speed for starting the vehicle. When vehicle speed exceeds a predetermined speed (for example 20 km/h), lock-up current flows through the coil so that the clutch is entirely engaged. At the deceleration of the vehicle, when the vehicle speed decreases below a predetermined speed, the clutch current is cut off to disengage the clutch.

In such a control system, if the accelerator pedal of the vehicle is depressed to accelerate the vehicle while the clutch is disengaged at low vehicle speeds, the clutch current is passed through the coil in dependence on the engine speed in a similar way to that at the starting of the vehicle. In such an acceleration condition, the driven shaft of the clutch is rotated by rotating wheels of the vehicle through the transmission. The rotation speed of the driven shaft is determined by the vehicle speed and transmission ratio at that time. When the speed of the drive member of the clutch is greatly less than the speed of the driven member when the clutch engages, the vehicle is braked by the engine operation, resulting in a decrease in the vehicle speed.

It is known, for example from US—A—3335829, to commence engagement of an electromagnetic clutch by increasing the clutch current in accordance with engine speed only once the engine speed exceeds the speed of the driven member of the clutch. In known systems such as those described, the clutch re-engagement current is, to some degree, dependent upon the vehicle speed and may, in consequence, vary in undesirable ways and, in some situations, may not entirely re-engage at an optimum moment.

It is an object of the present invention to provide a system for controlling the clutch torque of an electromagnetic clutch for vehicles which alleviates the aforesaid disadvantage of known systems.

The present invention seeks to provide a system for controlling the clutch torque of an electromagnetic clutch which may prevent the engine-braking at the re-engagement of the clutch in low speed conditions of the vehicle, thereby increasing the driveability of the vehicle.

According to the present invention, there is provided a system for controlling clutch torque for a vehicle having an engine, a transmission, and an electromagnetic clutch provided between the engine and the transmission, the clutch being automatically disengaged when vehicle speed decreases below a predetermined value, the system comprising means for measuring the engine speed, means for measuring the speed of a driven member of the electromagnetic clutch when the clutch is disengaged, means for detecting the accelerator pedal position of the vehicle and producing an acceleration signal, characterised by means for comparing the measured engine speed with the measured speed of the driven member, and producing an output when the speeds substantially coincide; and means responsive to the acceleration pedal signal and the output of the comparison means for producing a clutch engaging signal, thereby entirely engaging the electromagnetic clutch which has been entirely disengaged.

Preferred embodiments of the invention will now be described with reference to the accompanying drawings, wherein:

Figure 1 is a schematic diagram showing an embodiment of the preferred embodiment of the present invention;

Figure 2 is a graph showing a transmission characteristic of a transmission employed in a system of the preferred embodiment; and

Figure 3 is a flowchart showing a process in a microprocessor employed in another embodiment of the present invention.

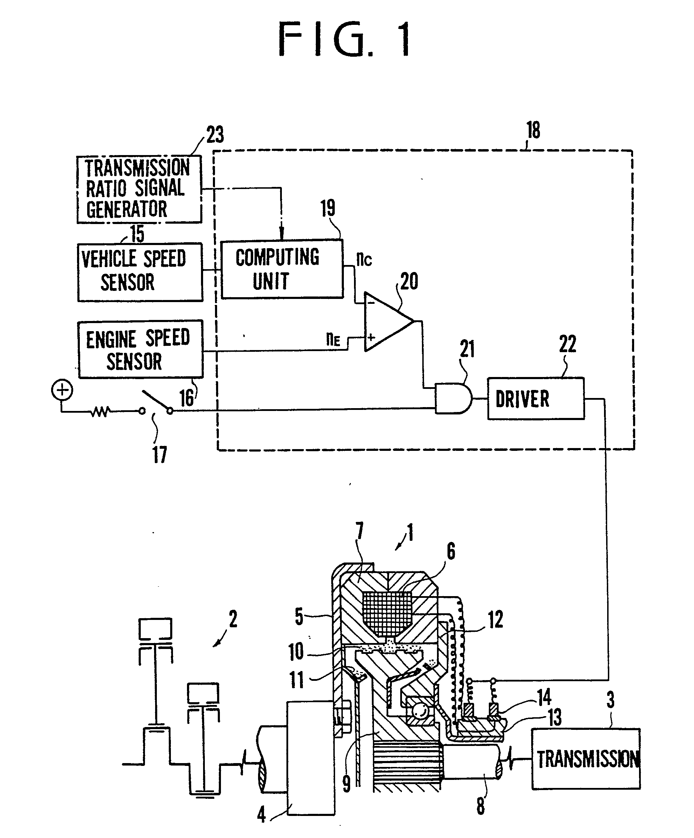

Referring to Figure 1, an electromagnetic powder clutch 1 is provided for transmitting the power of an engine 2 to wheels (not shown) of a vehicle through a belt-drive infinitely variable transmission 3. The electromagnetic powder clutch 1 comprises a drive member 7 connected to a crankshaft 4 of the engine 2 through a drive plate 5, a coil 6 provided in the drive member 7, a driven member 9 having its outer periphery spaced from the inner periphery of the drive member 7 by a gap 10, and a powder chamber 11 defined between the drive member 7 and driven member 9. The powder chamber 11 is filled with powder of magnetic material. The driven member 9 is secured to an input shaft 8 of the belt-drive transmission 3. A holder 12 secured to the drive member 7 carries slip rings 13 which are electrically connected to the coil 6. The coil 6 is supplied through brushes 14 and slip rings 13 with control current from a control unit 18.

When the magnetising coil 6 is excited by clutch current, drive member 7 is magnetised to produce a magnetic flux passing through the driven member 9. The magnetic powder is aggregated in the gap 10 by the magnetic flux and the driven member 9 is engaged with the drive member 7 by the powder. On the other hand, when the clutch current is cut off, the drive and driven members 7 and 9 are disengaged from one another.

The transmission ratio of the transmission 3 is determined in dependence on engine speed and vehicle speed. When the vehicle speed is lower than a predetermined low speed, the transmission ratio is at the highest ratio. The speed of the driven member 9 can be measured by multiplying the vehicle speed by the transmission ratio. To measure the speed of the driven member, a vehicle speed sensor 15, an engine speed sensor 16, and an accelerator pedal switch 17 are provided. The engine speed sensor 16 comprises, for example, a shaping circuit for shaping the ignition pulses of the engine or a sensor for detecting the crank angle of the crankshaft 4. The output of the vehicle speed sensor 15 is applied to a computing unit 19, and outputs of the computing unit and engine speed sensor 16 are applied to a comparator 20. Outputs of the comparator 20 and switch 17 are connected to an AND gate 21. The output of the AND gate 21 is applied to the coil 6 through a driver 22.

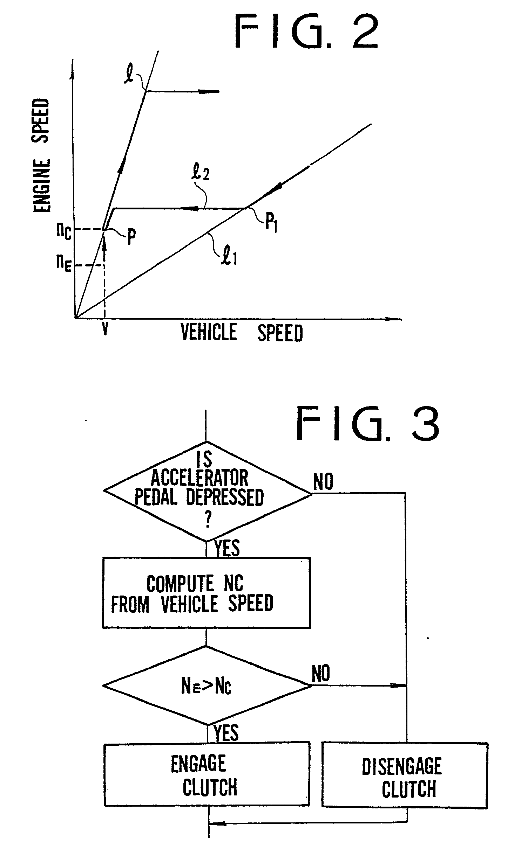

Figure 2 shows the relationship between the engine speed and vehicle speed of a vehicle, in which the range of variation of transmission ratio is represented. A line I is the highest transmission ratio line and a line $l_1$ is the lowest transmission ratio line. When the vehicle is decelerated, engine and vehicle speeds decrease along the line $l_1$ at the lowest transmission ratio. When the engine speed reaches a lower limit point $P_1$ for the lowest transmission ratio, the transmission ratio begins to increase. Accordingly, the vehicle speed decreases along the horizontal line $l_2$. When the vehicle speed reaches the highest transmission line I, the clutch 1 is disengaged. After that, when the accelerator pedal is depressed at point P in order to re-accelerate the vehicle, where the vehicle speed is V, the accelerator pedal switch 17 is turned on to apply a high level signal to AND gate 21. The computing unit 19 computes the speed (nc) of the driven member 9 by multiplying the vehicle speed (V) by the highest transmission ratio. When the engine speed (ne) is lower than the driven member speed (nc), the comparator 20 produces a low output. When the engine speed becomes higher than the driven member speed, by the depression of the accelerator pedal, the output of the comparator 20 goes to a high level. Accordingly, the AND gate 21 produces an output, so that clutch current flows in the coil 6. Thus, the clutch is engaged without occurring the engine braking, and engine speed and vehicle speed increase along the line I as shown in Figure 2.

Figure 3 shows a flow chart for controlling the clutch torque by a microcomputer.

Although the above described system is provided with an infinitely variable transmission, in a system for a manual transmission, transmission ratio signal generator 23 is provided as shown in Figure 1. The generator 23 is adapted to produce a transmission ratio signal dependent on gear ratio. The signal is applied to the computing unit 19 to produce the driven member speed.

From the foregoing, it will be understood that the present invention provides a clutch torque control system which engages the clutch when the speed of the drive member of the clutch coincides with the driven member speed, thereby to prevent the engine braking phenomenon.

## Claims

1. A system for controlling clutch torque for a vehicle having an engine (2), a transmission (3), and an electromagnetic clutch (1) provided between the engine and the transmission, the clutch being automatically disengaged when vehicle speed decreases below a predetermined value, the system comprising means (16) for measuring the engine speed, means (15, 19, 23) for measuring the speed of a driven member of the electromagnetic clutch when the clutch is disengaged, means (17) for detecting the accelerator pedal position of the vehicle and producing an acceleration signal, characterised by means (20) for comparing the measured engine speed with the measured speed of the driven member, and producing an output when the speeds substantially coincide; and means (21, 22) responsive to the acceleration pedal signal and the output of the comparison means for producing a clutch engaging signal, thereby entirely engaging the electromagnetic clutch which has been entirely disengaged.

2. A system according to claim 1, wherein the means (15, 19, 23) for measuring the speed of the driven member (9) has a vehicle speed sensor (15), a transmission ratio signal generator (23), and a computing unit (19) for computing the speed of the driven member (9) of the electromagnetic clutch (1) from the outputs of the vehicle speed sensor (15) and transmission ratio signal generator (19).

3. A system according to claim 1 or 2, wherein the means for comparing the engine speed with the speed of the driven member (9) is a comparator, and the means for producing the clutch control signal includes an AND gate (21).

4. A vehicle comprising an engine (2), a transmission (3) and an electromagnetic clutch (1) and a system (15—23) for controlling engagement of the clutch (1) as claimed in any of claims 1 to 3.

## Patentansprüche

1. Vorrichtung zum Steuern des Kupplungsmomentes eines Fahrzeuges, das einen Motor (2), ein Getriebe (3) und eine elektromagnetische Kupplung (1) zwischen dem Motor und dem Getriebe aufweist; bei der die Kupplung automatisch ausgekuppelt wird, wenn die Fahrgeschwindigkeit unterhalb eines vorbestimmten Wertes abfällt; mit Mitteln (16) zum Messen der Motordrehzahl, Mitteln (15, 19, 23) zum Messen der Drehzahl eines Abtriebsteils der elektromagnetischen Kupplung bei ausgekuppelter Kupplung und Mitteln zum Feststellen der Gaspedalposition des Fahrzeuges und Erzeugen eines Gaspedalsignals; gekennzeichnet durch Vergleichsmittel (20) zum Vergleichen der gemessenen Motordrehzahl mit der gemessenen Drehzahl des Abtriebsteils und zum Erzeugen eines Ausgangssignals, wenn die Drehzahlen etwa übereinstimmen; und Mittel (21, 22), die auf das Gaspedalsignal und das Ausgangssignal der Vergleichsmittel ansprechen und ein Einkuppelsignal erzeugen, um die vorher voll ausgekuppelte Kupplung voll einzukuppeln.

2. Vorrichtung nach Anspruch 1, dadurch gekennzeichnet, daß die Mittel (15, 19, 23) zum Messen der Drehzahl des Abtriebsteils (9) einen Fahrgeschwindigkeitssensor (15), einen Übersetzungsverhältnis-Signalgenerator (23) und eine Recheneinheit (19) zum Berechnen der Drehzahl des Abtriebsteils (9) der elektromagnetischen Kupplung (1) aus den Ausgangssignalen des Fahrgeschwindigkeitssensors (15) und des Übersetzungsverhältnis-Signalgenerators (19) aufweisen.

3. Vorrichtung nach Anspruch 1 oder 2, dadurch gekennzeichnet, daß die Vergleichsmittel zum Vergleichen der Motordrehzahl mit der Drehzahl des Abtriebsteils (9) eine Vergleichsschaltung ist, und daß die Mittel zum Erzeugen des Kupplungssteuersignals ein UND-Gatter (21) enthalten.

4. Fahrzeug mit einem Motor (2), einem Getriebe (3), einer elektromagnetischen Kupplung (1) und einer Vorrichtung (15—23) zum Steuern des Kuppelns der Kupplung (1) nach einem oder mehreren der Ansprüche 1 bis 3.

**Revendications**

1. Système pour commander le moment de torsion ou le couple de l'embrayage d'un véhicule comportant un moteur (2), une transmission (3) et un embrayage électromagnétique (1) entre le moteur et la transmission, embrayage qui débraye automatiquement lorsque la vitesse du véhicule descend au-dessous d'une valeur prédéterminée, système qui comprend des moyens (16) pour mesurer la vitesse du moteur, des moyens (15, 19, 23) pour mesurer la vitesse d'un organe entraîné ou mené de l'embrayage électromagnétique lorsque l'embrayage est débrayé, des moyens (17) pour détecter la position de la pédale d'accélérateur et produisant un signal d'accélération, caractérisé par des moyens (20) pour comparer la vitesse mesurée du moteur avec la vitesse mesurée de l'organe mené, en produisant un signal de sortie lorsque ces vitesses concordent pratiquement; et par des moyens (21, 22) qui, en réponse au signal d'accélération de la pédale d'accélérateur produisent un signal d'application de l'embrayage électromagnétique, assurant ainsi l'application ou l'engagement complet de l'embrayage qui était complètement débrayé.

2. Système selon la revendication 1, caractérisé en ce que les moyens (15, 19, 23) pour mesurer la vitesse de l'organe mené (9) comprennent un senseur de vitesse de véhicule (15), un générateur de signaux de rapport de transmission (23) et une unité de calcul (19) qui calcule la vitesse de l'organe mené (9) de l'embrayage électromagnétique (1) à partir des signaux de sortie du senseur de vitesse de véhicule (15) et de générateur de signaux de rapport de transmission (19).

3. Système selon la revendication 1 ou 2, caractérisé en ce que les moyens pour comparer la vitesse du moteur et celle de l'organe mené (9) comprennent un comparateur, tandis que les moyens pour produire le signal de commande d'embrayage incluent un circuit ET (21).

4. Véhicule comprenant un moteur (2), une transmission (3) et un embrayage électromagnétique (1), ainsi qu'un système (15—23) qui commande l'application de l'embrayage (1) tel que spécifié dans l'une quelconque des revendications 1 à 3.

EP 0 147 200 B1

# F I G. 1

EP 0 147 200 B1

# FIG. 2

# FIG. 3